# EUROPEAN PATENT SPECIFICATION

(11) **EP 2 145 244 B1**
(45) Date of publication and mention of the grant of the patent: **20.04.2016**
(21) Application number: 08753318.8
(22) Date of filing: 06.05.2008
(51) Int. Cl.: G06F 3/0354, G06F 1/16

(54) **MOUSE**
MAUS
SOURIS

(30) Priority: 07.05.2007 KR 20070044112; 30.01.2008 KR 20080009414; 30.01.2008 KR 20080009415
(43) Date of publication of application: 20.01.2010
(73) Proprietor: Intellectual Discovery, Inc., Gangnam-gu Seoul, 135-090 (KR)
(72) Inventor: Kim, Youn Soo, Songpa-gu, Seoul 138-200 (KR)
(74) Representative: Hössle Patentanwälte Partnerschaft
(86) International application number: PCT/KR2008/002521
(87) International publication number: WO 2008/136626

(56) References cited:
- EP-A1- 0 640 937
- DE-U1- 20 314 713
- FR-A1- 2 713 793
- JP-A- 5 158 610
- JP-A- 08 272 525
- JP-A- 2000 105 666
- KR-A- 20060 028 221
- US-A- 5 726 684
- US-A1- 2003 058 219
- US-A1- 2003 214 484

## Description

### [Technical Field]

The present invention relates to a mouse device for use with an information processing instrument such as a personal computer and, more particularly, to a mouse device, which is not required to move beyond a limited range in order to cause a pointer to move in succession, can be conveniently used since a space greater than the limited range is not required, and can be used as a conventional mouse device according to user selection.

### [Background Art]

A mouse device is divided into mechanical, optical and opto-mechanical devices. The mechanical mouse device detects the movement of a ball fitted in the bottom thereof and causes a pointer or cursor to move in response to the detected movement of the ball. The optical mouse device uses light to detect movement. When the optical mouse device moves on a patterned pad, a photosensor, installed on an underside of the mouse device, detects the movement of the optical mouse device based on a change in the pattern of the pad, thereby causing the pointer to move in response to the movement of the mouse device. The opto-meachnical mouse device uses a photosensor having a slit to detect movement. The photosensor detects the movement of the mouse device based on the movement of a wheel, thereby causing the pointer to move in response to the movement of the mouse device. The conventional mouse devices require a space where the mouse device can move.

However, environments in which a mouse device is used do not always provide a sufficient space for the mouse device to freely move. Without a sufficient space for the mouse device to move, the user cannot move the pointer freely.

Furthermore, when the user works on a computer for a long time, it becomes uncomfortable to operate the conventional mouse device on a backing surface or a pad having a friction surface. Accordingly, fatigue in the wrist increases, and a pain in the wrist is frequently complained.

In the meantime, notebook computers are used in an environment which does not sufficiently provide a space for a mouse device to move. Due to this problem, the notebook computers have used a trackball, in which a ball is rolled to move a pointer, or a touchpad. However, neither the trackball nor the touchpad is easy to use, and thus are rarely used in other cases than the notebook computers.

FR 2 713 793 A1 discloses a mouse type controller for entering data into a computer, including a control button with a concave top into which the user places a digit. A detector senses movement of the button with respect to a box in which the control is mounted. The control button is able to move against spring action to the left and right, but is also able to tilt. The user may put his middle finger on the button to provide lateral movement, and can then put his index finger and his ring finger on the flat surfaces to either side of the main button. This allows the surface to be tilted, with the action being detected by contacts mounted beneath the surface.

EP 0 640 937 A1 discloses an input control device for inputting signals for controlling the direction and speed of movement of a cursor on a display screen such as a mouse serving as an input control device for a computer comprising a control key and a processor, the processor being adapted to determine the direction and magnitude of an operating force applied to the control key and generate corresponding direction and velocity signals.

### SUMMARY OF THE DISCLOSURE

According to the invention, there is provided a mouse device according to claim 1.

Further aspects of the invention are defined by the dependent claims.

### [Description of Drawings]

FIG. 1 is an exploded perspective view illustrating a first embodiment of a mouse device according to the invention;
FIG. 2 is a perspective view illustrating the first embodiment of the mouse device according to the invention;
FIG. 3 is a plan view illustrating the first embodiment of the mouse device according to the invention;
FIG. 4 is a plan view illustrating a second embodiment of the mouse device according to the invention;
FIG. 5 is a plan view illustrating an elastic means of the second embodiment of the mouse device according to the invention;
FIG. 6 is a side elevation view illustrating a third embodiment of the mouse device according to the invention;
FIG. 7 is a perspective view illustrating an application in which the mouse device of the invention is attached to a keyboard;
FIG. 8 is a perspective view illustrating another application in which the mouse device of the invention is attached to a notebook computer;
FIG. 9 is a perspective view illustrating an alternative form of the housing of the mouse device according to the invention;
FIG. 10 is an exploded perspective view illustrating the mouse device according to the invention;
FIG. 11 is a bottom perspective view illustrating the mouse body of the mouse device according to the invention;
FIG. 12 is a cross-sectional view illustrating the mouse device according to the invention;
FIG. 13 is a cross-sectional view illustrating a fourth embodiment of the mouse device according to the invention;
FIGS. 14 and 15 are cross-sectional views illustrating a connection structure of a signal cable in a fifth embodiment of the mouse device according to the invention;
FIGS. 16 and 17 are cross-sectional views illustrating a sixth embodiment of the mouse device according to the invention;
FIG. 18 is a cross-sectional view illustrating a seventh embodiment of the mouse device according to the invention;
FIG. 19 is a cross-sectional view illustrating an eighth embodiment of the mouse device according to the invention;
FIG. 20 to FIG. 37 are cross-sectional and exploded perspective views illustrating further examples of mouse devices.

### [Best Mode]

Hereinafter, a mouse device according to the invention will be described more fully with reference to the accompanying drawings, in which exemplary embodiments thereof are shown.

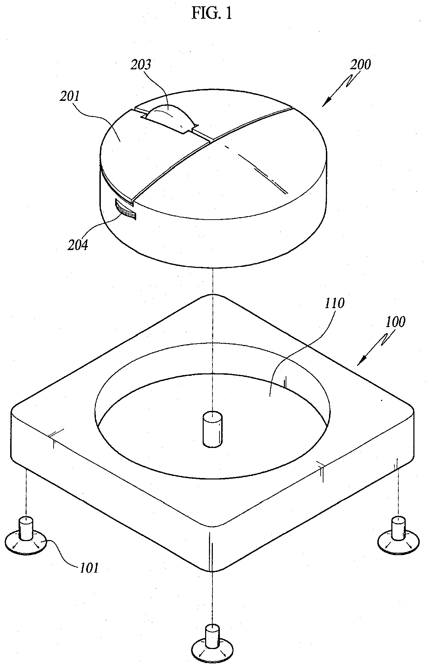

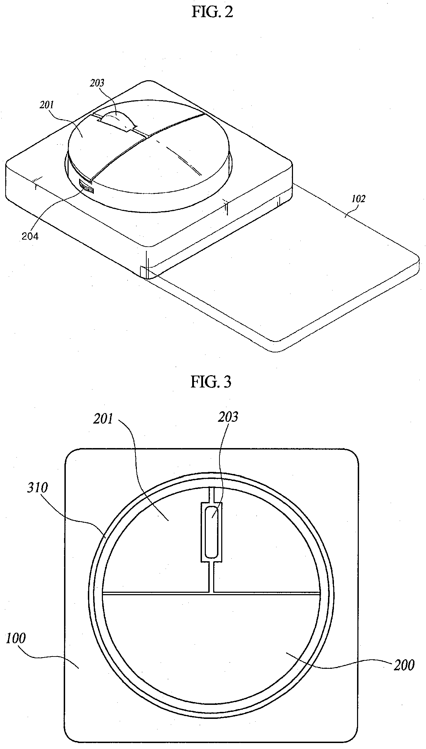

FIG. 1 is a perspective view illustrating an exploded state of a first embodiment of the mouse device according to the invention, and FIG. 2 is a perspective view illustrating an assembled state of the first embodiment of the mouse device according to the invention.

As shown in FIGS. 1 and 2, the mouse device of the invention generally includes a housing 100 and a mouse body 200 housed in the housing 100.

The housing 100 has a circular receiving part 110, which is open upward, and an electronic circuit board (not shown) installed therein. The electronic circuit board serves to transmit control signals corresponding to the movement of the mouse body 200, which will be described later, to a computer.

The housing 100 may also have a cord (not shown) connected to an outside circuit or an internally-mounted component for realizing a wireless mouse device according to a method of connecting the mouse device of the invention to the computer.

The cord may be implemented as a serial line, a Personal System/2 (PS/2) cable or a Universal Serial Bus (USB) cable. The serial line is connected to a serial port, the PS/2 cable is connected to a dedicated portion, and the USB cable is connected, in parallel, to an extension slot.

In order to realize a wireless mouse device, infrared (IR) communication components, radio communication components or a Bluetooth module may be installed in the housing.

The housing 100 may have slippage-preventing rubber members or rubber suckers 101 attached to the underside thereof. The rubber suckers 101 serve to fix the housing 100 to a smooth surface using the atmospheric pressure.

As an alternative, a wrist pad 102 can be attached to the housing 100 so as to fix the housing 100 by the weight of a wrist of a user. The wrist pad 102 stably supports the wrist of the user and also stably fixes the housing 100 to the installed surface, thereby minimizing the movement of the housing 100. Of course, a silicone or rubber material can be provided on the top portion of the wrist pad 102.

The mouse body 200 is configured as a circular body smaller than that of the receiving part 110 of the housing 100 so as to be received in the receiving part 110. The mouse body 200 has input buttons 201 and a scroll button 203 on the top portion thereof, which are exposed from the top portion and are arrayed in positions for user convenience.

The input buttons 201 support some functions. For example, the user can press down and release a button on a specific point (click), move the mouse device while pressing down on the button (drag), or press the button twice in rapid succession (double click). The input buttons 201 can also display some functional items such as "copy," "paste" and "cancel" on a display screen so that the user can select one of them. The scroll button 203 is implemented as being rotatable, such that the user can turn up or down the wheel of the scroll button 203 with a finger to cause displayed text or graphics to move up or down on the display screen.

On the side face of the mouse body 200, protrusions (not shown) are repeatedly formed for correct contact with detecting means 310, which will be described later. The protrusions (not shown) have a typical gear-like shape in which threads form a circular shape.

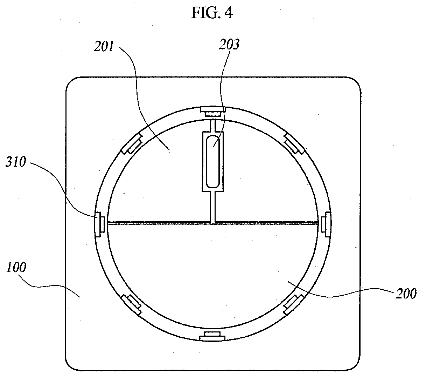

FIG. 3 is a plan view illustrating the first embodiment of the mouse device according to the invention, and FIG. 4 is a plan view illustrating a second embodiment of the mouse device according to the invention.

The detecting means 310 detects the movement of the mouse body 200, thereby causing a pointer or cursor to move on a display screen. The detecting means 310 may be implemented as a pressure sensor attached to the inside wall of the receiving part 110 or pressure switches attached to the inside wall of the receiving part 110, in which each pressure switch is spaced apart from adjacent one at a predetermined interval.

As shown in FIG. 3, the pressure sensor is attached along the inside wall of the receiving part 110. The pressure sensor has a plurality of contact points installed therein so as to detect that the mouse body 200 comes into contact with each contact point or that the mouse body 200 in contact with the contact point is pressed, thereby moving the pointer on the display screen of the computer.

The pointer moves on the display screen in response to the detection of a contact signal, and the speed of the pointer is adjusted by the detection of a pressure, which is added after the contact.

As shown in FIG. 4, a plurality of the pressure switches is mounted on the inside wall of the receiving part 110. The pressure switches are push switches, some of which are pushed by the mouse body 200. Specifically, the mouse body 200 moving in one direction inside the receiving part 110 presses some of the push switches, which are adjacent to the mouse body 200. Then, the pointer moves on the display screen of the computer based on the location and the number of the push switches, which are pressed by the mouse body 200.

Alternatively, the moving speed of the pointer can be determined by detecting the strength that the mouse body presses the push switches.

In the cases where the pressure sensor or the pressure switch itself cannot control the speed of the pointer, other schemes can be used. A first scheme is to set the pressure sensor or the pressure switch to simply indicate the moving direction of the pointer while controlling the speed of the pointer via software. Secondly, a speed switch 204 for controlling the speed of the pointer may be added to the mouse body 200. In order to improve the convenience of operation, the speed switch 204 may preferably be provided on the left part of the mouse body 200 where a thumb is generally located.

The pressure sensor and the pressure switches, which generate a signal in response to a contact, are well known in the art, and thus the internal structure and operation thereof will not be described in detail.

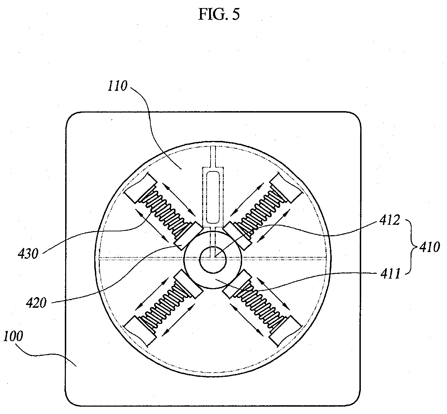

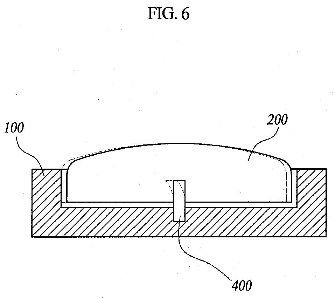

FIG. 5 is a plan view of the second embodiment of the mouse device according to the invention, and FIG. 6 is a side elevation view of a third embodiment of the mouse device according to the invention.

In the foregoing, it has been described that the pointer of the computer was moved by the detecting means 310. When the mouse body 200 moves inside the receiving part 110 of the housing 100, the pointer is caused to move. The mouse body 200 inside the receiving part 110 may maintain contact with the detecting means 310, thereby causing the pointer to move against the intention of the user. In order to prevent this result, an elastic means 400 is disposed between the housing 100 and the mouse body 200, thereby restoring the mouse body 200 to the original position, such that the mouse body 200 does not contact the detecting means 310.

As shown in FIG. 5, the elastic means 400 of the second embodiment includes an operating part 410, a plurality of pressing members 420 and springs 430. The operating part 410 has a circular bottom portion 411, which is inserted into a hollow region (not shown) in the bottom of the receiving part so as to be horizontally movable in the hollow region, and a top portion 412, which protrudes toward the receiving part 110 and is connected to the mouse body 200. The pressing members 420 are coupled to the bottom portion 411 of the operating part 410 while surrounding the latter. The springs 430 elastically force the pressing members 420 against the operating part 410.

The pressing members 420 have an arc-shaped surface, which stably comes into close contact with the bottom portion 411 of the operating part 410. Four of the pressing members 420 are arrayed at an interval of 90° around the bottom portion 411 of the operating part 410.

The pressing members 420 are not limited to the four pressing members 420 arrayed at the interval of 90°, but the number of the pressing members can be increased/decreased if necessary.

Each of the springs 430 is provided on a respective one of the pressing members 420, which are arrayed at the interval of 90°. The springs 430 have the same elastic force in the tensile direction, such that the operating part 410 is always located in the center of the receiving part 110, thereby preventing the mouse body 200 from contacting the detecting means 310.

The pressing members 420 may be implemented as switches, such that the moving direction of the computer scroll can be controlled according to the degree that the pressing members 420 are pressed.

As shown in FIG. 6, the elastic means 400 of the third embodiment is implemented as an elastic bar. The elastic bar is fixed, at the bottom thereof, to the center of the receiving part 110 and, at the top thereof, to the bottom of the mouse body 200 in order to apply a restoring force around the vertical direction.

The elastic bar is made of a leaf spring member or synthetic resin that has a restoring force.

Accordingly, the mouse device of the invention is constructed with the mouse body 200 housed in the receiving part 110 of the housing 100, the detecting means 310 attached to the inside wall of the receiving part 110 and the elastic means 400 interposed between the housing 100 and the mouse body 200.

While the construction of the invention has been described in the foregoing, the operation of the invention will be now described more fully with reference to FIGS. 1 to 6.

Firstly, when the user moves the mouse body 200 in a direction that he/she wants inside the receiving part 110 of the housing 100 while holding the mouse body 200, the moving mouse body 200 contacts the detecting means 310 on the inside wall of the receiving part 110, thereby generating coordinate signals. The pointer on the display screen responds to the coordinate signals generated, so as to move following the movement of the mouse body 200. After the pointer moved, an instruction is inputted from the input buttons 201 and/or the scroll button 203 so as to enable an operation that the user wants.

When the user releases the mouse body 200, the mouse body 200 is moved to the center of the receiving part 110 by the elastic means 400. The mouse body 200 returns to the standby position so as not to contact the detecting means 310 any more.

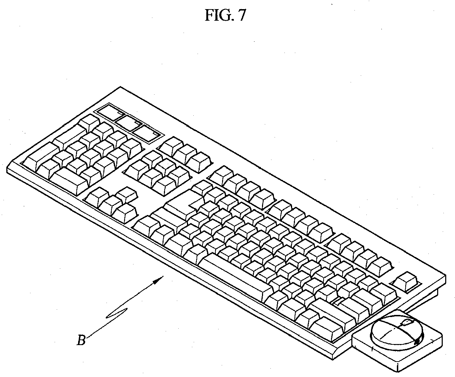

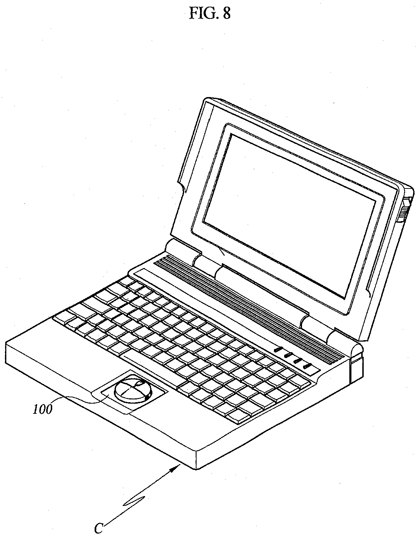

FIG. 7 is a perspective view illustrating an application in which the mouse device of the invention is attached to a keyboard, and FIG. 8 is a perspective view illustrating another application in which the mouse device of the invention is attached to a notebook computer.

As shown in FIG. 7, the mouse device as described above can be used as being attached to one portion of a keyboard B, thereby taking advantage of a reduced space. In the case of a wired mouse device, cords can be connected to the inside of the keyboard, thereby preventing a problem of messy cords.

Of course, the mouse device can be used as being separated from the keyboard B in order to promote user convenience.

As shown in FIG. 8, the mouse device of the invention can be provided on a middle portion of a notebook computer C, in which a touch pad would generally be installed. Alternatively, the mouse device can be detachably attached to one lateral side of the notebook computer C.

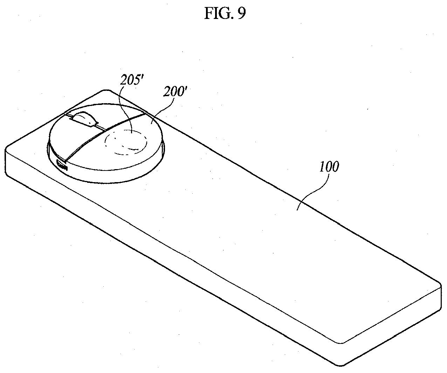

FIG. 9 is a perspective view illustrating an alternative form of the housing of the mouse device according to the invention.

As shown in FIG. 9, the mouse device of the invention includes a bar-shaped housing 100 extending along the length direction thereof and a mouse body 200 provided on the housing 100, such that the user can operate the mouse body 200 with an index finger. Particularly, the user operates the mouse body 200 to move with the index finger while holding the bar-shaped housing 100, thereby causing the pointer of the computer to move.

The mouse body 200 is also provided with a finger recess 205, in which the user can place the index finger in order to more stably operate the mouse body 200.

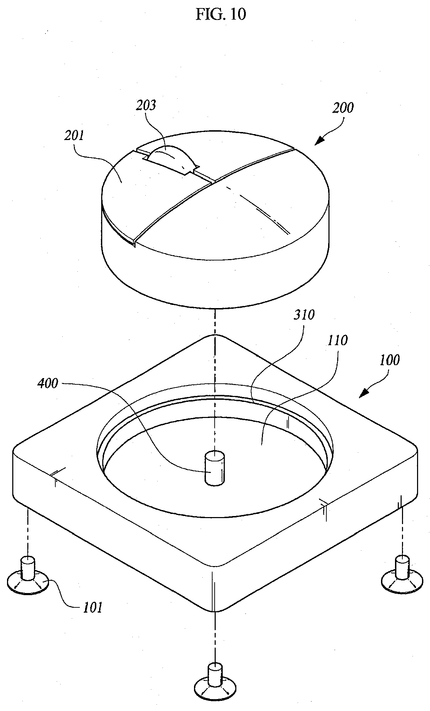

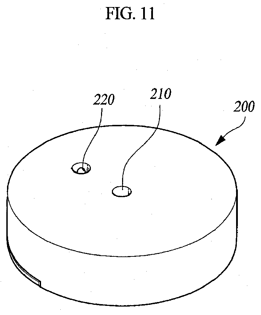

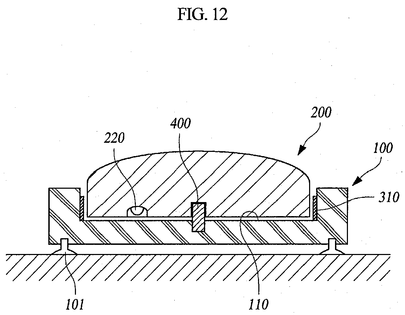

FIG. 10 is an exploded perspective view illustrating the mouse device according to the invention, FIG. 11 is a bottom perspective view illustrating the mouse body of the mouse device according to the invention, and FIG. 12 is a cross-sectional view illustrating the mouse device according to the invention.

As shown in FIGS. 10 to 12, the mouse device of the invention includes a housing 100 having a receiving part 110 therein, a mouse body 200 detachably housed inside the receiving part 110 and a pressure-detecting means 300 located on the inside wall of the receiving part 110. When the mouse body 200 contacts the mouse body 200, the pressure-detecting means 300 detects the movement of the mouse body 200 so as to generate a pointer movement signal. The mouse device also includes a restoring means 400, which is fixedly coupled to the bottom of the receiving part 110 and is inserted, at the top portion thereof, into the mouse body 200.

The housing 100 has rubber suckers 101 attached to the underside thereof, so as to fix the housing 100 to the underlying, backing surface. The receiving part 110 is shaped as a rounded recess.

As shown in FIG. 10, the housing 100 has the receiving part 110 located in the center thereof. As an alternative, one portion of the housing 100 may be extended so as to support a wrist or an arm of the user, which will be placed on the extended portion of the housing 100. When the housing 100 is configured to support the wrist or the arm of the user placed thereon, the housing 100 can be more reliably fixed to the backing surface.

The mouse body 200 is configured to be more or less smaller than the receiving part 110 so as to play in every horizontal direction inside the receiving part 110. As shown in FIG. 12, when the mouse body 200 is located in the center of the receiving part 110, the mouse body 200 does not contact any part of the pressure-detecting means 300.

When the mouse body 200 moves in one direction from the position shown in FIG. 12 to contact the pressure-detecting means 300, the pressure-detecting means 300 detects the movement of the mouse body 200, thereby causing the pointer to move on the display screen. The pressure-detecting means 300 causes the pointer to move on the display screen in response to a detected contact signal and controls the speed of the pointer by reflecting the detected amount of pressure, which is added after the contact.

Here, the pressure-detecting means 300 can be constructed to increase or decrease the speed of the pointer according to the contact pressure that the mouse body 200 applies to the pressure-detecting means 300. That is, the pressure-detecting means 300 can control the speed of the pointer by reflecting the detected amount of pressure, which is added after the contact with the mouse body 200. Accordingly, the pointer moves fast when the user strongly pushes the mouse body 200, but moves slowly when the user does not apply a strong force to the mouse body 200.

When the user has brought the mouse body 200 into contact with the pressure-detecting means 300 by forcing the mouse body 200 in one direction, the mouse body 200 keeps in contact with the pressure-detecting means 300 even though the user releases his/her hand from the mouse body 200, such that the pointer can move in succession.

The restoring means 400 is a component devised to prevent this problem, and is implemented as a cylindrical elastic body. The restoring means 400 is fixedly coupled, at the bottom end thereof, to the bottom center of the receiving part 110 and is inserted, at the top end thereof, into an insert-hole 210 in the bottom center of the mouse body 200. Accordingly, when an external force is not applied to the mouse body 200, the restoring means 400 restores the mouse body 200 to the original position such that the mouse body 200 is spaced apart from the pressure-detecting means 300.

The invention is characterized in that the mouse body 200 can be used like a conventional "movable mouse device" as being separated from the housing 100.

As shown in FIG. 11, the mouse body 200 has a movement-detecting means 220 in the bottom thereof. When the mouse body 200 is separated from the housing 100, the movement-detecting means 220 serves to detect the movement of the mouse body 200 so as to generate a pointer movement signal, such that the mouse body 200 can be used as a conventional movable mouse device when separated from the housing 100.

Accordingly, the user can suitably use the mouse device of the invention according to respective environments. That is, the user can use the mouse device by operating the mouse body 200 seated in the housing 100. The user can also use the mouse device of the invention as a movable mouse device by operating the mouse body 200 as being separated from the housing 100.

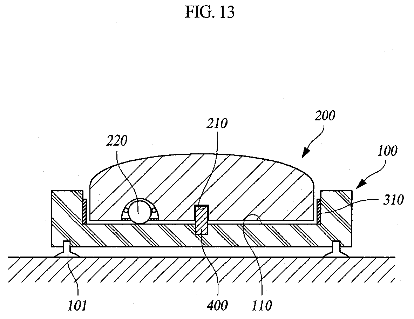

FIG. 13 is a cross-sectional view illustrating a fourth embodiment of the mouse device according to the invention.

The movement-detecting means 220 of the mouse body 200 can be implemented as an optical sensor, which is used in a typical optical mouse device as shown in FIGS. 11 and 12. Alternatively, as shown in FIG. 13, the movement-detecting means 220 of the mouse body 200 can be implemented as a ball, rollers and an encoder, which are used in a conventional ball mouse. The construction of the mouse body, in which the rollers rotate following the rotation of the ball and the encoder thereby generates a pointer movement signal, is substantially the same as the construction of the conventional ball mouse for generating a pointer movement signal, and thus will not be described in detail.

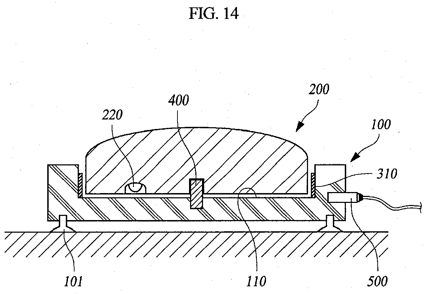

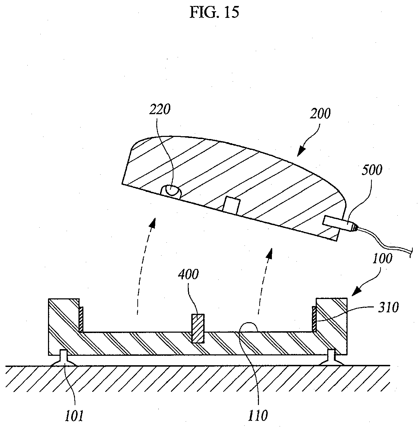

FIGS. 14 and 15 are cross-sectional views illustrating a connection structure of a signal cable 500 in a fifth embodiment of the mouse device according to the invention.

In the case where the mouse device of the invention is used as a wired mouse device, a signal cable 500 is used in order to transmit generated pointer movement signals to the computer.

When the mouse body 200 is fitted in the housing 100, particularly, to be used as a mouse device, the signal cable 500 is connected to the housing 100 to transmit a pointer movement signal from the pressure-detecting means 300 to the computer. When the mouse body 200 is separated from the housing 100, particularly, to be used as a movable mouse device, the signal cable 500 is connected to the mouse body 200 so as to transmit a pointer movement signal from the movement-detecting means 220 to the computer.

In the case where the signal cable 500 is connected to the housing 100 as shown in FIG. 14, the pointer movement signal from the pressure-detecting means 300 is transmitted to the computer. In the case where the signal cable 500 is connected to the mouse body 200 as shown in FIG. 15, the pointer movement signal from the movement-detecting means 220 is transmitted to the computer. Accordingly, the pointer movement signal is not transmitted from both the pressure-detecting means 300 and the movement-detecting means 220 at the same time.

The signal cable 500 may also be steadily connected to the mouse body 200 or the housing 100. Here, the signal cable 500 transmits the pointer movement signal from the pressure-detecting means 300 when the mouse body 200 is fitted in the housing 100, but transmits the pointer movement signal from the movement detecting means 220 when the mouse body 200 is separated from the housing 100. In this case, the connecting position of the signal cable 500 is not required to be changed, thereby improving the usability of the signal cable 500.

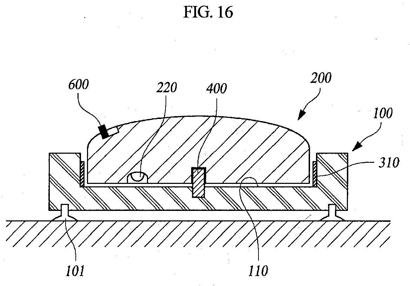

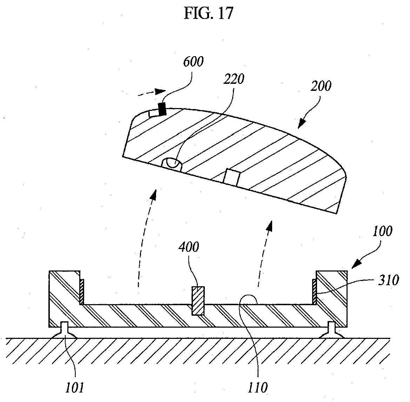

FIGS. 16 and 17 are cross-sectional views illustrating a sixth embodiment of the mouse device according to the invention.

The mouse device of the invention can be implemented as a wireless mouse device. In this case, the pressure-detecting means 300 and the movement-detecting means 220 are constructed to transmit a pointer movement signal by radio waves, and the mouse body is provided with a mode switch 600 for turning on/off the operation of the movement-detecting means 220.

In the state shown in FIG. 16, the mode switch 600 is operated to turn off the movement-detecting means 220, such that only the pointer movement signal from the pressure-detecting means 300 is transmitted to the computer. Conversely, in the state shown in FIG. 17, the mode switch 600 is operated to turn on the movement-detecting means 220 and the mouse body 200 is separated from the housing 100, such that only the pointer signal from the movement-detecting means 220 is transmitted to the computer.

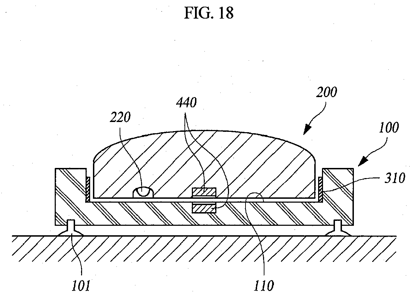

FIG. 18 is a cross-sectional view illustrating a seventh embodiment of the mouse device according to the invention.

The restoring means 400 for restoring the mouse body 200 to the center of the receiving part 110 can be constructed using a magnetic force in addition to the structure, which restores the mouse body 200 by its own restoring elastic force, as shown in FIGS. 1 to 17.

That is, the restoring means 400 may be constructed with a pair of magnetic bodies 440, one of the magnetic bodies 440 mounted on the bottom of the receiving part 110 and the other magnetic body 440 mounted on the bottom of the mouse body 200. The magnetic bodies 440 oppose each other to generate an attractive force between them. When the mouse body 200 moves in one direction, the orientation of the magnetic bodies 440 is misaligned in one direction (i.e., the vertical axes of the magnetic bodies 440 are misaligned). If the mouse body 200 is released from an external force, the magnetic bodies 440 return to the original position due to the attractive force, caused by the magnetic bodies 440 tending to be vertically aligned (i.e., the magnetic bodies 440 tending to be aligned along the vertical axes thereof). As a result, the mouse body 200 also returns to the position as shown in FIG. 18.

In the case of the restoring means 400 implemented as an elastic body, the elastic body may be deformed or damaged with use to such an extent that the mouse body 200 cannot properly return to the original position. The restoring means 400 implemented as a pair of the magnetic bodies 440 can provide an advantage of improved endurance in that the components will be rarely deformed or damaged with use.

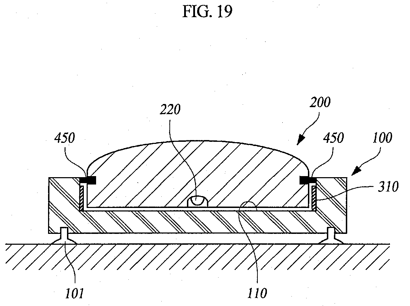

FIG. 19 is a cross-sectional view illustrating an eighth embodiment of the mouse device according to the invention.

The restoring means 400 may be applied as elastic members 450 protruding from the inside wall of the receiving part 110 toward the mouse body 200. That is, the mouse body 200 moving in one direction compresses at least one of the elastic members 450 in the corresponding direction, such that the elastic force of the elastic member 450 can restore the mouse body 200 to the original position when an external force is released.

Here, the mouse body 200 may preferably be provided with indentations in the outer circumference thereof, each of which receives a respective one of the elastic members 450 in order to improve the close contact between the elastic members 450 and the mouse body 200.

Further, the elastic members 450 may preferably be formed along the entire inner circumference of the receiving part 110 so as to apply an elastic force to the mouse body 200 irrespective of the moving direction of the mouse body 200. As such, the elastic members 450 arranged along the entire inner circumference of the receiving part 110 can advantageously prevent foreign materials such as dust or dirt from entering between the mouse body 200 and the housing 100.

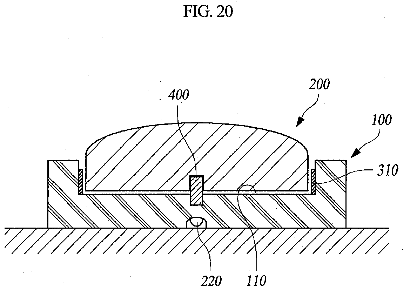

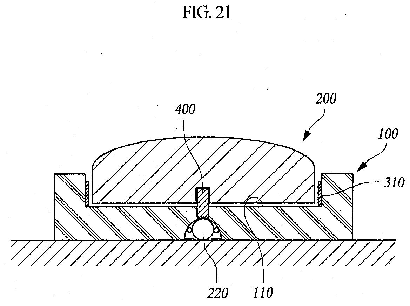

FIG. 20 is a cross-sectional view illustrating a further example of a mouse device, and FIG. 21 is a cross-sectional view illustrating another example of a mouse device.

The mouse device of the invention is implemented as a movable mouse device, in which the mouse body 200 is separated from the housing 100. In an unclaimed example, the mouse device can be constructed in such a fashion that the housing 100 with the mouse body 200 fitted therein can be used as a mouse device.

That is, the mouse device of this example includes the housing 100 having the receiving part 110 therein, the mouse body 200 detachably fitted in the receiving part 110 and the detecting means 310 located on the inside wall of the receiving part 110. The detecting means 310 serves to detect the movement of the mouse body 200, when the mouse body 200 comes into contact with the detecting means 310, thereby generating a pointer movement signal. The movement-detecting means 220 may also be provided in the bottom of the mouse body 200 to detect the movement of the housing 100 so as to cause the pointer to move. Similar to the foregoing description with reference to FIGS. 12 and 13, the movement-detecting means 220 may be implemented as an optical sensor (see FIG. 20), or be constructed with a ball, rollers and an encoder (see FIG. 21).

The devices shown in FIGS. 20 and 21 are so constructed to generate a pointer movement signal by detecting the movement of the housing 100, and thus do not use the rubber suckers 101 for fixing the housing 100.

When the user moves both the mouse body 200 and the housing 100 while holding the mouse body 200, the movement-detecting means 200 in the bottom of the housing 100 detects the moving direction and speed of the housing 100 to generate a corresponding pointer movement signal.

That is, the mouse devices shown in FIGS. 20 and 21 can operate as a mouse device in which the housing 100 is fixed but only the mouse body 200 is movable, or operate as a conventional movable mouse device in which a set of the mouse body 200 and the housing 100 can move. According to the above-described construction of the mouse devices, in the case where the mouse device is to be mode-converted into the movable mouse device, the mouse body 200 is not required to be separated from the housing 100, and thus the operating mode of the mouse devices can be easily converted.

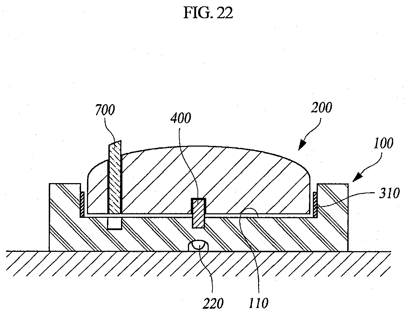

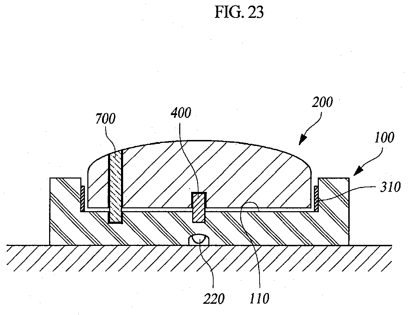

FIGS. 22 and 23 are cross-sectional views illustrating another example of a mouse device.

According to the examples shown in FIGS. 20 and 21, the outer face of the mouse body 200 is spaced apart from the inside wall of the receiving part 110. When the user tries to move both the mouse body 200 and the housing 100 while holding the mouse body 200, the mouse body 200 and the housing 100 may not move as an integral part, and thus it may be inconvenient to operate the mouse device.

Accordingly, as shown in FIGS. 22 and 23, the mouse device further includes a locking means 700 for fixing the mouse body 200 to the housing 100.

The locking means 700 is slidably coupled to the mouse body 200, and is constructed in such a fashion that the distal end thereof (i.e., the bottom end in this embodiment) fits into the housing 100 so as to integrally lock the mouse body 200 to the housing 100 when the locking means 700 is pushed once, but escapes from the housing 100 so as to unlock the mouse body 200 from the housing 100 when the locking means 700 is pushed twice. When the mouse device is used, the locking means 700 is unlocked as shown in FIG. 22 so that the mouse body 200 can move independently from the housing 100. When the mouse device is used as a movable mouse device, the locking means 700 locks the mouse body 200 to the housing 100 so that the mouse body 200 and the housing 100 can be integrally moved.

While the locking means 700 of this example is described as being a knock type that alternately fits in and escapes out in response to the repeated pushing of the locking means 700, this is not limiting. Rather, the locking means 700 can be implemented as any structures that can lock the mouse body 200 to the housing 100. Since this type of locking structure is widely used in various forms, a detailed description thereof will be omitted.

The mouse device can be constructed in such a fashion that either the movement-detecting means 200 or the pressure-detecting means 300 can be selected to generate the pointer movement signal according to whether the locking means 700 locks the mouse body 200 to the housing 100 or unlocks the mouse body 200 from the housing 100.

When the locking means 700 locks the mouse body 200 to the housing 100, the movement-detecting means 220 is activated but the pressure-detection means 300 is inactivated, so that the pointer moves in response to the pointer movement signal from the movement-detecting means 200. Conversely, when the locking means 700 unlocks the mouse body 200 from the housing 100, the pressure-detecting means is activated but the movement-detecting means is inactivated, so that the pointer moves in response to the pointer movement signal from the pressure-detecting means 300.

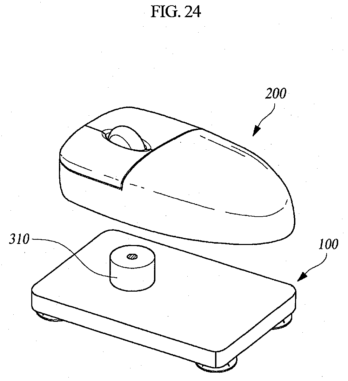

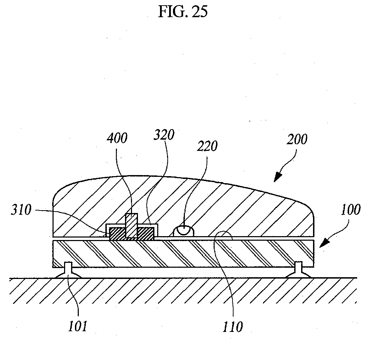

FIGS. 24 and 25 are an exploded perspective view and a cross-sectional view illustrating a further example of a mouse device.

The mouse devices as shown in FIGS. 1 to 23 are manufactured in a circular configuration in which the mouse body 200 and the receiving part 110 are symmetrical in all directions, such that the same pressure can be applied to the pressure-detecting means 300 irrespective of the moving direction of the mouse body 200. In some cases, however, the circular configuration of the mouse body 200 may cause inconvenience to the user when he/she holds the mouse device with the hand.

To prevent this, as shown in FIG. 24, the mouse body 200 is manufactured in a predetermined shape (i.e., a streamlined shape like a conventional mouse device) such that the user can easily hold the mouse body 200 with the hand. The pressure-detecting means 300 is cylindrically shaped and a cylindrical recess 320 is formed in the bottom of the mouse body 200 with a diameter slightly larger than the outside diameter of the pressure-detecting means 300, such that the pressure-detecting means 300 can fit into the mouse body 200, particularly, into the recess 320 of the mouse body 200. The restoring means 400 is fixedly coupled, at the top end thereof, to the innermost end of the recess 320 (i.e., the top end of the recess 320 in FIG. 25) and is inserted, at the bottom end thereof, into the pressure-detecting means 300, such that the outer side surface of the pressure-detecting means 300 is spaced apart from the inside wall of the recess 320. When the mouse body 200 is mounted on the top surface of the housing 100, the bottom end of the restoring means 400 is inserted into the pressure-detecting means 300 so as to locate the pressure-detecting means 300 in the center of the recess 320 unless an external force is applied.

Since the cylindrically-shaped pressure-detecting means 300 is fitted into the mouse body, a contact pressure can be uniformly applied to the mouse body irrespective of the moving direction of the mouse body even if the mouse body does not have a circular outer shape. Accordingly, the operation of the pointer can be realized to be uniform in respective directions. That is, the outer shape of the mouse body 200 can be variously designed to meet the tastes of consumers.

The movement-detecting means 220 is provided in the bottom of the mouse body 200, and when the mouse body 200 is separated from the housing 100, detects the movement of the mouse body 200 so as to generate a pointer movement signal.

The restoring means 400 is not limited to the bar-shaped elastic body as shown in FIG. 25, but can also be implemented as a pair of the magnetic bodies 440 or the elastic members 450, which was described above with reference to FIGS. 18 and 19.

Specifically, the restoring means 400 can be implemented as a pair of magnetic bodies (not shown) for generating an attractive force, in which one magnetic body is disposed in the bottom center of the recess 320 and the other magnetic body is disposed in the top center of the pressure-detecting means 300. Alternatively, the restoring means 400 can be implemented as elastic members (not shown) protruding toward the pressure-detecting means 300. When the restoring means 400 is implemented as the elastic members, the mouse body 200 may preferably be provided with indentations (not shown) in the outer circumference thereof, each of which receives a respective one of the elastic members. The elastic members may preferably be formed along the entire inside wall of the recess 320.

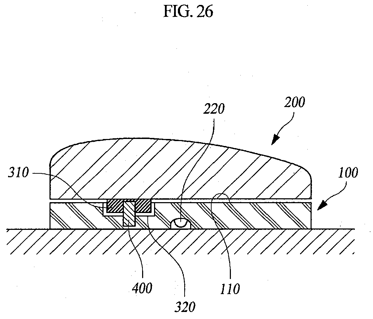

FIG. 26 is a cross-sectional view illustrating another example of a mouse device.

In the case of using the mouse device shown in FIG. 25 as a movable mouse device, the mouse body 200 is required to be separated from the housing 100. Of course, it is also possible to use both the mouse body 200 and the housing 100 as a movable mouse device.

As shown in FIG. 26, the mouse device of this embodiment includes the mouse body 200, the pressure-detecting means 300 and the housing 200. The pressure-detecting means 300 is provided in the bottom of the mouse body 200 to detect an axially-applied contact pressure so as to generate a pointer movement signal. The housing 200 has a recess 320, which receives the pressure-detecting means 300 therein, such that the mouse body 200 is installed on the top surface of the housing 200. The movement-detecting means 220 is provided in the bottom of the housing 100 to detect the movement of the housing 100, thereby generating a pointer movement signal.

As described above, when the mouse device is manufactured in the construction as shown in FIGS. 25 and 26, the outer shape of the mouse device can substantially be the same as that of a conventional movable mouse device. Particularly, when the user uses the mouse device as a movable mouse device by moving both the mouse body 200 and the housing 100, the user can feel as if he/she is operating a conventional movable mouse device. Accordingly, as an advantageous effect, the user can be easily familiar with and be easily accustomed to use the mouse.

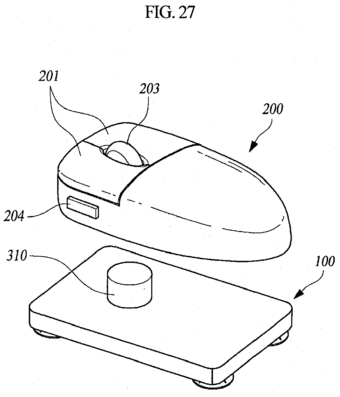

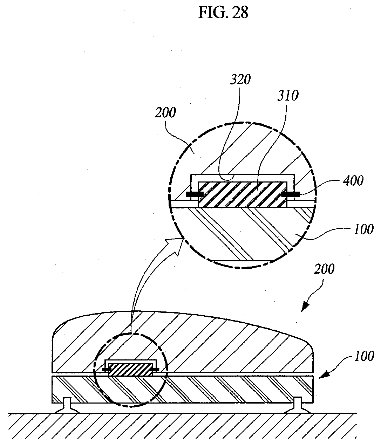

FIG. 27 is an exploded perspective view illustrating another exapmle of a mouse device, and FIG. 28 is a cross-sectional view illustrating the mouse device.

As shown in FIGS. 27 and 28, the mouse device includes the housing 100 seated on the backing surface, the cylindrically-shaped detecting means 310 provided on the top surface of the housing 100, and the mouse body 200 seated on the housing 100. The recess 320 is provided in the bottom of the mouse body 200 to receive the detecting means 310 therein.

On the top portion of the mouse body 200, the input buttons 201 and the scroll button 203 are arrayed in positions for user convenience. The input buttons 201 support some functions to the user. For example, the user can press down and release a button on a specific point (click), move the mouse device while pressing down on the button (drag), or press the button twice in rapid succession (double click). The input buttons 201 can also display some functional items such as "copy," "paste" and "cancel" on a display screen so that the user can select one of them. The scroll button is implemented as being rotatable, such that the user can turn up or down the scroll button with a finger to cause displayed text or graphics to move up or down on the display screen.

The input buttons 201 and the scroll 203 may also be provided on the lateral side of the housing 100. Since the mouse device rarely moves from the backing surface, even if the input buttons 201 and the scroll 203 are provided on the lateral side, the user can easily click the input buttons 201 and the scrolls while laterally pushing the mouse body 200 in one direction.

The detecting means 310 is a component that detects the moving direction of the mouse body 200 so as to move the pointer following the detected direction. The operation of the detecting means 310 will be described as follows.

The detecting means 310 shown in FIG. 28 is located in the center of the recess 320, in which the pointer is not caused to move. When the user horizontally pushes the mouse body 200 with the hand from the position shown FIG. 28, the inside wall of the recess 320 contacts the detecting means 310. The detecting means 310 in turn generates a pointer movement signal to cause the pointer to move following the mouse body 200 in a direction that the inside wall of the recess 320 comes into contact with the detecting means 310. Preferably, both the detecting means 310 and the recess 320 can be cylindrically shape, such that the same amount of pressure can be applied to the detecting means 310 irrespective of the direction that the mouse body 200 moves.

After the mouse body 200 pushed in one direction brought the inside wall of recess 320 into contact with the detecting means 310, even if the user removes his/her hand from the mouse body 200, the inside wall of the recess 320 may keep in contact with the detecting means 310. Then, the pointer moves in succession even if the user does not push the mouse body 200 in one direction. The elastic means 400 is a component devised to prevent this problem. The elastic means 400 is coupled, at one portion thereof, to the inside wall of the recess 320 and is in contact, at the other portion thereof, with the detecting means 310, such that the detecting means 310 remains in the center of the recess 320 when an external force is not applied to the mouse body 200. That is, the elastic means 400 restores the mouse body 200 to the original position such that the inside wall of the recess 320 is spaced apart from the detecting means 310.

The elastic means 400 may be made of elastic material such as sponge or elastic synthetic resin, or a spring such as a coil spring or a leaf spring.

In the case where the other end of the elastic means 400 is adapted to simply contact the outer side surface of the detecting means 310, when the mouse body 200 is pushed in one direction, the detecting means 310 is spaced apart from the other end of the elastic means 400, such that foreign materials such as dirt or dust may enter the recess 320. Accordingly, the detecting means 310 may preferably be formed of indentations in the outer surface thereof, each of which receives a respective distal end of the elastic means 400.

The elastic means 400 may preferably be formed along the entire inner circumference of the recess 320 so as to restore the mouse body 200 to the original position even if the mouse body 200 was pushed in any direction.

The elastic means 400 for restoring the mouse body 200 to the original position may be replaced by a pair of magnets for generating an interactive force, in which one of the magnets is fixedly coupled to the housing 100 and the other magnet is fixedly coupled to the mouse body 200. As an alternative, the elastic means 400 may be implemented as springs or a synthetic resin material fixedly constructed to apply a restoring force in a direction perpendicular to the orientation of the housing 100 and the mouse body 200. That is, the elastic means 400 may be replaced by any structure that can restore the mouse body 200 to the original position such that the detecting means is not under a contact pressure to unless an external force is applied.

The detecting means 310 may preferably be constructed to adjust the speed of the pointer according to the amount of force that is applied to the mouse body 200. Specifically, detecting means 310 may be constructed to adjust the speed of the pointer by reflecting the detected amount of pressure, which is added after the contact with the inside wall of the recess 320. Thus, the pointer is caused to move quickly when the user pushes the mouse body 200 hard but to move slowly when the user pushes the mouse body 200 smoothly.

Further, the speed switch 204 may be provided on one lateral side of the mouse body 200 or the housing 100, such that the user can simply control the speed of the pointer. The user can accelerate or decelerate the moving speed of the pointer by adjusting the speed switch 204. The speed switch 204 may also be provided with an additional function that enables the pointer to move at a predetermined speed when the switch is clicked once.

As a feature of the mouse device as constructed above, the outer shape of the mouse body 200 can be designed in various forms since the detecting means is received inside the mouse body 200.

In the case of conventional mouse devices, the detecting means 310 on the inside wall of the housing 100 surrounds the outer circumference of the mouse body 200. The detecting means 310 is ring shaped and the mouse body 200 has a circular plan shape such that applied pressure can be uniform across all directions. It is inconvenient for the user to hold the mouse body 200 with the hand. In the mouse device in which the detecting means 310 is received inside the mouse body 200, only the recess 320 in contact with the detecting means 310 is required to be circular, but the outer shape can be designed in various forms such that the user can easily hold the mouse device. As shown in FIG. 27, the mouse body 200 in the mouse device can be manufactured to have an ergonomically streamlined shape like a conventional mouse device.

As described above, the mouse device constructed as shown in FIGS. 27 and 28, can have an outer shape substantially the same as that of a conventional movable mouse device. As an advantageous effect, the user can be easily accustomed to the way of using the mouse device without avoidance.

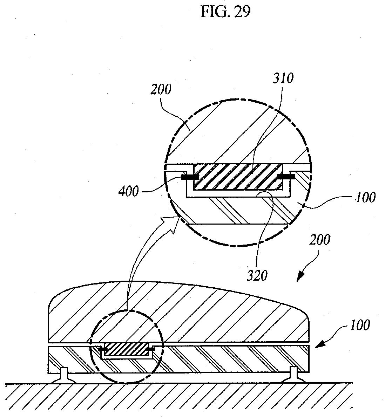

FIG. 29 is a cross-sectional view illustrating another example of a mouse device.

As shown in FIG. 29, the mouse is so constructed that the detecting means 310 is coupled to the bottom of the mouse body 200 and the recess 320 is formed in the top portion of the housing 100. When compared with the examples shown in FIGS. 27 and 28, the positions of the detecting means 310 and the housing 100 are exchanged with each other.

Even if the positions of the detecting means 310 and the housing 100 are exchanged with each other, the example shown in FIG. 29 is consistent with the example shown in FIGS. 27 and 28 in that the outer shape of the mouse body 200 can be designed in various forms. The same is to the method of operating the pointer by moving the mouse body 200 and the method of restoring the mouse body 200 to the original position using the elastic means 400. The example shown in FIG. 29 also has the same advantageous effects in that the outer shape of the mouse body 200 can be designed in various forms and the pointer can be caused to move in succession even if the mouse body 200 is not moved beyond a limited range.

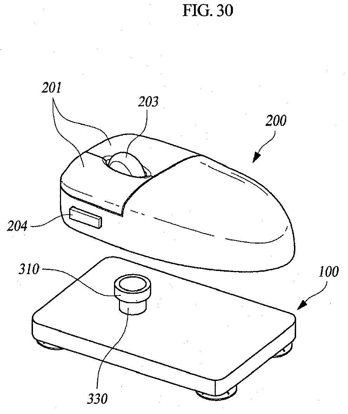

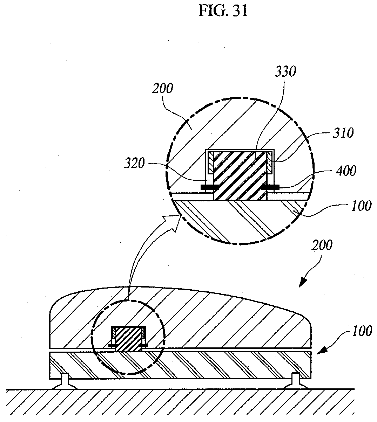

FIG. 30 is an exploded perspective view illustrating a further example of a mouse device, and FIG. 31 is a cross-sectional view of this mouse device.

In the mouse device the detecting means 310 itself can be cylindrically shaped as in the examples of FIGS. 27 and 28. However, it is difficult to manufacture the detecting means 310 in a cylindrical shape when the detecting means 310 is implemented as one or more switches or plate type sensors.

In the mouse device in which the detecting means 310 is implemented as the switches or sensors, the housing 100 is placed on the backing surface and has a lug 330 protruding upward from the top portion thereof. The mouse body 200 is seated on the top surface of the housing 100, and the recess 320 in the bottom of mouse body 200 receives the lug 330 therein. The detecting means 310 can be provided on the outer side surface of the lug 330.

Further, according to this example in which the detecting means 310 is coupled to the lug 330, the elastic means 400 for restoring the mouse body 200 may preferably be coupled, at one end thereof, to the inside wall of the recess 320 and, at the other end thereof, to an outer circumferential portion of the lug 330, to which the detecting means 310 is not coupled. According to this construction that keeps the elastic means 400 away from contact with the detecting means 310, there is an advantage of fundamentally preventing the detecting means 310 from malfunctions, which would otherwise occur due to contact with the elastic means 400 following the movement of the mouse body 20.

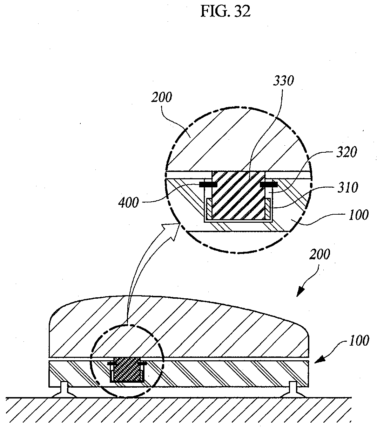

FIG. 32 is a cross-sectional view illustrating an example of a further mouse device.

Even in the case where the detecting means 310 is coupled to the lug 330, the positions of the detecting means 310 and the recess 320 can also be exchanged with each other as in the embodiment of FIG. 29. As shown in FIG. 32, the mouse device can be so constructed that the lug 330 is coupled to the mouse body 200 and the recess 320 is formed in the housing 100 (such that the positions of the lug 330 and the recess 320 are exchanged with each other when compared to the embodiment shown in FIGS. 30 and 31).

Accordingly, a designer of the mouse device can freely change the positions of the lug 330 and the recess 320 according to the internal structure of the housing 100 and the mouse device 200.

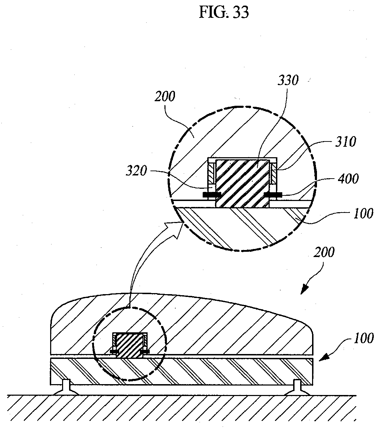

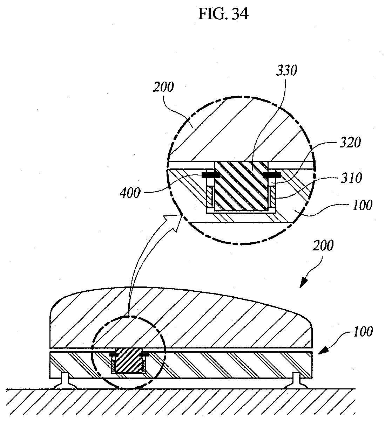

FIG. 33 and FIG. 34 are cross-sectional views illustrating further examples of mouse devices.

In the case where the lug 330 is additionally provided as in the examples of FIGS. 30 to 32, the detecting means 310 may not be coupled to the outer side surface of the lug 330 but can be coupled to the inner side surface of the recess 320 as shown in FIGS. 33 and 34.

In the case where the detecting means 310 is coupled to the inner side surface of the recess 320, the detecting means 310 is caused to move following the mouse body 200. The detecting means 310 then closely contacts the lug 330, thereby applying a pressure to the detecting means 310. In both the case where the detecting means 310 is coupled to the inner side surface of the recess 320 and the case where detecting means 310 is coupled to the outer side surface of the lug 330, the movement of the mouse body 200 applies the pressure to the detecting means 310 in the same fashion, thereby causing to generate pointer movement signals in the same fashion.

The detecting means 310 coupled to the inner side surface of the recess 320 has a greater mounting area than the detecting means coupled to the outer side surface of the lug 330, and thus can more precisely detect the moving direction of the mouse body 200. Particularly, in the case where the detecting means 310 is implemented as switches, a larger number of the switches can be mounted on the inner side surface of the recess 320 than on the outer side surface of the lug 330. This, as a result, can enhance the effect of precisely detecting the moving direction of the mouse body 200.

In the case where the detecting means 310 is attached to the inside wall of the recess 320 as described above, the elastic means 400 for restoring the mouse body 200 to the original position is also coupled, at one end thereof, to the inside wall of the recess 320 and is in contact, at the other end thereof, with the outer side surface of the lug 330. More preferably, the other end of the elastic means 400 may be fitted on the lug 330.

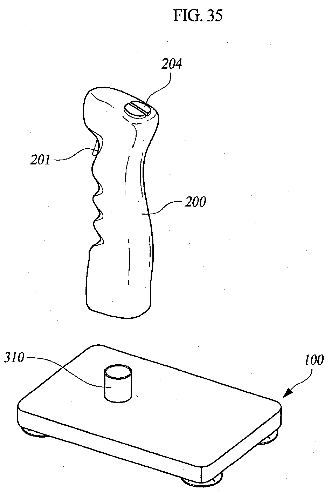

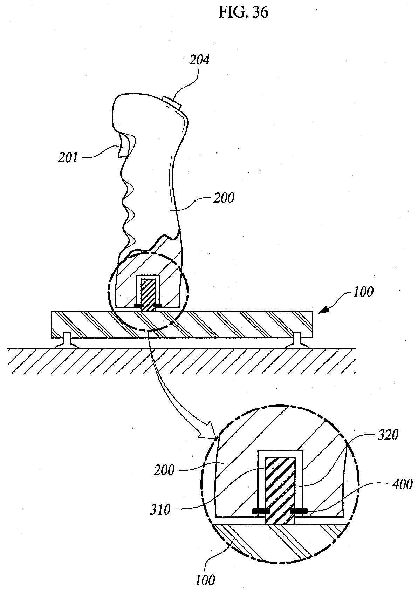

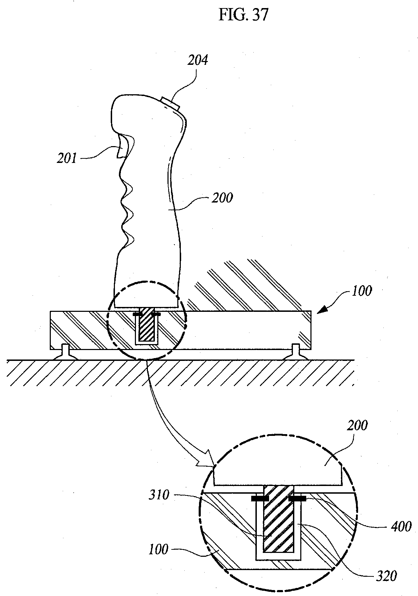

FIG. 35 is an exploded perspective view illustrating another example of a mouse device, FIG. 36 is a cross-sectional view illustrating this mouse device, and FIG. 37 is a cross-sectional view illustrating a further example of a mouse device.

As shown in FIGS. 35 to 37, the mouse body 200 can be implemented as a stick with the underside thereof facing the top surface of the housing 100.

With the mouse body 200 implemented as a stick, the user can use the mouse device with the palm wrapped around the outer circumference of the mouse body 200 as if he/she uses a joystick.

In this example where the mouse body 200 is implemented as a stick having a vertical length, the detecting means 310 can preferably be designed higher than in the devices of FIGS. 1 to 34. This is because, if the height of the detecting means 310 is too small, the detecting means 310 may be extracted from the recess 320 when the mouse body 200 is laterally pushed in one direction. As shown in FIGS. 35 and 36, the detecting means 310 and the recess 320 may be provided, respectively, on the top portion of the housing 100 and in the bottom of the mouse body 200. Alternatively, as shown in FIG. 37, the detecting means 310 and the recess 320 may be provided, respectively, on the underside of the mouse body 200 and in the top portion of the housing 100.

The mouse body 200 implemented as a stick also has the input buttons 201 and the speed switch 204, which are provided on the top portion of the mouse body 200. If the input buttons 201 and the speed switch 204 are provided on the outer side portion of the mouse body 200, the mouse body 200 may be accidentally pushed in a lateral direction when the user pushes the input buttons 201 or the speed switch 204, thereby causing to move the pointer against the intention of the user. Accordingly, the input buttons 201 and the speed switch 204 may preferably be provided on the top portion of the mouse body 200. Of course, the input buttons 201 can also be provided on the outer side surface of the mouse body 200, in a region where the user's fingers are located. This is because the user sometimes has to push the input buttons 201 with a finger while forcing the mouse body 200 in a lateral direction. A component such as the speed switch 204, which is less frequently used, can also be provided on the housing 100.

Even in the case of the mouse body 200 implemented as a stick, the detecting means 310 can be coupled to the outer side surface of the lug 330 (refer to FIGS. 30 to 32) or to the inside wall of the recess 320 (refer to FIGS. 33 to 34).

### [Industrial Applicability]

As set forth above, the mouse device of the invention need not move beyond a limited range in order to cause the pointer to move, thereby improving the usability thereof. Since the mouse device is not required to move beyond the limited range, the use of the mouse device can reduce the fatigue of the wrist of the user, thereby preventing a pain in the wrist.

The user can freely move the pointer on the monitor screen only if a region for mounting a mouse device is ensured. Since no more space greater than the mouse-mounting region is not required for the mouse device to move, the environments associated with the use of the mouse device can be improved.

Further, since the mouse device fixedly is attachable to a keyboard, an ergonomic design, in which the mouse device is located adjacent to the keyboard, can be realized. As advantageous effects, the path of actions of the operator can be reduced, user convenience can be enhanced, and thus workability can be greatly improved.

The mouse device of the invention can be implemented as a stationary type, in which the pointer can be caused to move in succession even though the mouse body is not moved beyond the limited range, and also be implemented as a movable type like a conventional movable mouse device. Accordingly, the mouse device of the invention can be conveniently used according to environments and conditions where the mouse device is to be used.

When the mouse device of the invention is used as a movable type, the mouse body is moved as being separated from the housing. As an advantageous effect, the mouse device of the invention can be provided in various forms to meet user convenience.

The mouse device of the invention can be designed into various forms such that the user can easily hold the mouse body.

Furthermore, the mouse device of the invention can cause the pointer to move to a distance even if the mouse body is moved in a very limited range, and the mouse body can be designed into various forms so as to be easily held by the user.

Moreover, the mouse device of the invention has advantages in that the user can accelerate or decelerate the speed of the pointer according to the amount of force that the user drives the mouse body.

## Claims

1. A mouse device for causing to move a pointer of a computer, comprising:
a housing (100) having a receiving part (110) therein;
a mouse body (200) fitted inside the receiving part (110),
a detecting means (310) located on an inside wall of the receiving part (110) to generate a pointer movement signal by detecting a movement of the mouse body (200) when pressed or contacted by the mouse body (200) **characterized in that** the detecting means (310) is configured to adjust the speed of the pointer by the detection of pressure after the contact with the mouse body (200); and
**in that** the mouse body (200) is detachably housed in the receiving part (110) and can be used as a conventional movable mouse device as being separated from the housing (100) according to user selection and a movement-detecting means (220) is provided on an underside of the mouse body (200) to generate a pointer movement signal by detecting a movement of the mouse body (200) when the mouse body (200) is separated from the housing (100).

2. The mouse device according to claim 1,
wherein the detecting means (310) includes a pressure sensor attached to the inside wall of the receiving part (110) or wherein the detecting means (310) includes a plurality of pressure switches provided on the inside wall of the receiving part (110), wherein each of pressure switches is spaced apart from an adjacent one of the pressure switches.

3. The mouse device according to claim 1,
wherein the mouse device further comprises an elastic means (400) for locating the mouse body (220) in a central portion of the receiving part (110) so as to separate the mouse body (200) and the detecting means (310) from each other.

4. The mouse device according to claim 3, wherein the elastic means (400) includes:
an operating part (410) having a circular bottom portion (411) inserted into a hollow region in a bottom portion of the receiving part (110) and a top portion (412) protruding toward the receiving part (110) so as to be connected to the mouse body (200);
a plurality of pressing members (420) coupled, in close contact, to the bottom portion of the operating part (410); and
springs (430) elastically forcing the pressing members (420) toward the operating part (410).

5. The mouse device according to claim 4, wherein the pressing members (420) are arrayed at an interval of 90° from each other around the bottom portion (411) of the operating part (410), and the springs (430) provided on the pressing members (420) have an equal elastic force in a tensile direction.

6. The mouse device according to claim 3, wherein the elastic means (400) comprises an elastic bar, which is fixed to the central portion of the receiving part (110) and is fixed, at a top end thereof, to the mouse body (200).

7. The mouse device according to claim 1, further comprising
a signal cable (500) transmitting the pointer movement signals, wherein the signal cable (500) is connected to the housing (100) to transmit the pointer movement signal from the pressure-detecting means (310) when the mouse body (200) is fitted to the housing (100), and is connected to the mouse body (200) to transmit the pointer movement signal from the movement-detecting means (220) when the mouse body (200) is separated from the housing (100); or
a signal cable (500) connected to the mouse body (200) to transmit the pointer movement signal, wherein the signal cable (500) transmits the pointer movement signal from the pressure-detecting means (310) when the mouse body (200) is fitted to the housing (100), and transmits the pointer movement signal from the movement-detecting means (220) when the mouse body (200) is separated from the housing (100);
or wherein each of the detecting means (310) and the movement-detecting means (220) is adapted to transmit the pointer movement signal by a radio wave, and the mouse device further comprising a mode switch (600) provided on the mouse body so as to turn on/off an operation of the movement-detecting means (220).

8. The mouse device according to claim 7, further comprising
a pair of opposing magnetic bodies (440) for generating an attractive force, wherein one of the magnetic bodies is provided in a bottom of the receiving part (110), and a remaining one of the magnetic bodies is provided in an underside of the mouse body (200).

9. The mouse device according to claim 7, further comprising
an elastic member (450) protruding from the inside wall of the receiving part (110) toward the mouse body (200), wherein the mouse body (200) has an indentation receiving a distal end of the elastic member (450).

10. The mouse device according to claim 9, wherein the elastic member (450) is formed along entire circumference of the inside wall of the receiving part (110).

## Patentansprüche

1. Mausvorrichtung, um zu bewirken, einen Zeiger eines Computers zu bewegen, mit:
einem Gehäuse (100) mit einem aufnehmenden Teil (110) darin,
einem in das aufnehmende Teil (110) eingepassten Mauskörper (200),
einem auf einer Innenwand des aufnehmenden Teils (110) angeordneten Detektionsmittel (310) zum Erzeugen eines Zeigerbewegungssignal durch Detektieren einer Bewegung des Mauskörpers (200), wenn es durch den Mauskörper (200) gedrückt oder kontaktiert wird,
**dadurch gekennzeichnet, dass** das Detektionsmittel (310) dazu konfiguriert ist, die Geschwindigkeit des Zeigers bei der Detektion von Druck nach dem Kontakt mit dem Mauskörper (200) anzupassen, und
dass der Mauskörper (200) lösbar in dem aufnehmenden Teil (110) untergebracht ist und als eine herkömmliche bewegliche Mausvorrichtung verwendet werden kann, wenn sie gemäß einer Anwenderauswahl von dem Gehäuse (100) getrennt ist, und ein Bewegungsdetektionsmittel (220) auf einer Unterseite des Mauskörpers (200) vorgesehen ist, um ein Zeigerbewegungssignal durch Detektieren einer Bewegung des Mauskörpers (200) zu erzeugen, wenn der Mauskörper (200) von dem Gehäuse (100) getrennt ist.

2. Mausvorrichtung nach Anspruch 1,
bei der das Detektionsmittel (310) einen Drucksensor umfasst, der an der Innenwand des aufnehmenden Teils (110) angebracht ist, oder wobei das Detektionsmittel (310) eine Mehrzahl von Druckschaltern umfasst, die auf der Innenwand des aufnehmenden Teils (110) vorgesehen sind, wobei jeder Druckschalter beabstandet von einem benachbarten der Druckschalter angeordnet ist.

3. Mausvorrichtung nach Anspruch 1,
wobei die Mausvorrichtung des weiteren ein elastisches Mittel (400) zum Anordnen des Mauskörpers (220) in einem mittigen Abschnitt des aufnehmenden Teils (110) umfasst, um den Mauskörper (200) und das Detektionsmittel (310) voneinander zu trennen.

4. Mausvorrichtung nach Anspruch 3, bei der das elastische Mittel (400) folgendes umfasst:
einen Betriebsteil (410) mit einem kreisförmigen unteren Abschnitt (411), der in ein hohles Gebiet in einem unteren Abschnitt des aufnehmenden Teils (110) eingefügt ist, und einem oberen Abschnitt (412), der zu dem aufnehmenden Teil (110) vorsteht, um mit dem Mauskörper (200) verbunden zu sein,
eine Mehrzahl von Druckelementen (420), die in engem Kontakt mit dem unteren Abschnitt des Betriebsteils (410) gekoppelt sind, und
Federn (430), die die Druckelemente (420) elastisch zu dem Betriebsteil (410) drücken.

5. Mausvorrichtung nach Anspruch 4, bei der die Druckelemente (420) in einem gegenseitigen Abstand von 90° um den unteren Abschnitt (411) des Betriebsteils (410) angeordnet sind und die Federn (430), die auf den Druckelementen (420) vorgesehen sind, eine gleiche elastische Kraft in einer Zugrichtung haben.

6. Mausvorrichtung nach Anspruch 3, bei der das elastische Mittel (400) einen elastischen Stab aufweist, der an dem mittigen Abschnitt des aufnehmenden Teils (110) befestigt ist und mit seinem oberen Ende an dem Mauskörper (200) befestigt ist.

7. Mausvorrichtung nach Anspruch 1, die des weiteren folgendes umfasst:
ein Signalkabel (500), das die Zeigerbewegungssignale überträgt, wobei das Signalkabel (500) mit dem Gehäuse (100) verbunden ist, um das Zeigerbewegungssignal von dem Druckdetektionsmittel (310) zu übertragen, wenn der Mauskörper (200) in das Gehäuse (100) eingepasst ist, und mit dem Mauskörper (200) verbunden ist, um das Zeigerbewegungssignal von dem Bewegungsdetektionsmittel (220) zu übertragen, wenn der Mauskörper (200) von dem Gehäuse (100) getrennt ist, oder
ein Signalkabel (500), das mit dem Mauskörper (200) verbunden ist, um das Zeigerbewegungssignal zu übertragen, wobei das Signalkabel (500) das Zeigerbewegungssignal von dem Druckdetektionsmittel (310) überträgt, wenn der Mauskörper (200) in das Gehäuse (100) eingepasst ist, und das Zeigerbewegungssignal von dem Bewegungsdetektionsmittel (220) überträgt, wenn der Mauskörper (200) von dem Gehäuse (100) getrennt ist,
oder wobei das Detektionsmittel (310) und das Bewegungsdetektionsmittel (220) jeweils dazu ausgelegt sind, das Zeigerbewegungssignal mittels einer Funkwelle zu übertragen, und die Mausvorrichtung des weiteren einen Betriebsartenschalter (600) umfasst, der auf dem Mauskörper vorgesehen ist, um den Betrieb des Bewegungsdetektionsmittels (220) ein-/auszuschalten.

8. Mausvorrichtung nach Anspruch 7, die des weiteren folgendes umfasst:
ein Paar gegenüberliegender magnetischer Körper (440) zum Erzeugen einer anziehenden Kraft, wobei einer der magnetischen Körper in einem Boden des aufnehmenden Teils (110) vorgesehen ist und der verbleibende der magnetischen Körper in einer Unterseite des Mauskörpers (200) vorgesehen ist.

9. Mausvorrichtung nach Anspruch 7, die des weiteren folgendes umfasst:
ein elastisches Element (450), das von der Innenwand des aufnehmenden Teils (110) zu dem Mauskörper (200) vorsteht, wobei der Mauskörper (200) eine Vertiefung hat, die ein distales Ende des elastischen Elements (450) aufnimmt.

10. Mausvorrichtung nach Anspruch 9, bei der das elastische Element (450) entlang des gesamten Umfangs der Innenwand des aufnehmenden Teils (110) gebildet ist.

## Revendications

1. Dispositif dit souris pour amener un pointeur d'un ordinateur à se déplacer, comprenant :
un boîtier (100) ayant à l'intérieur une partie de réception (110) ;
un corps de souris (200) monté à l'intérieur de la partie de réception (110),
un moyen de détection (310) situé sur une paroi intérieure de la partie de réception (110) pour générer un signal de mouvement de pointeur en détectant un mouvement du corps de souris (200) lorsqu'il est pressé par ou qu'il reçoit un contact du corps de souris (200),
**caractérisé en ce que** le moyen de détection (310) est configuré pour ajuster la vitesse du pointeur par la détection de pression après le contact avec le corps de souris (200) ; et
**en ce que** le corps de souris (200) est logé de façon détachable dans la partie de réception (110) et peut être utilisé comme un dispositif dit souris mobile traditionnelle en étant séparé du boîtier (100) en accord avec une sélection faite par un utilisateur, et un moyen de détection de mouvement (220) est prévu sur une face inférieure du corps de souris (200) pour générer un signal de mouvement de pointeur en détectant un mouvement du corps de souris (200) quand le corps de souris (200) est séparé du boîtier (100).

2. Dispositif dit souris selon la revendication 1,
dans lequel le moyen de détection (310) inclut un capteur de pression attaché à la paroi intérieure de la partie de réception (110), ou dans lequel le moyen de détection (310) inclut une pluralité de commutateurs de pression prévus sur la paroi intérieure de la partie de réception (110), dans lequel chacun des commutateurs de pression est écarté d'un commutateur de pression adjacent parmi les commutateurs de pression.

3. Dispositif dit souris selon la revendication 1,
dans lequel le dispositif comprend en outre un moyen élastique (400) pour placer le corps de souris (220) dans une portion centrale de la partie de réception (110) de manière à séparer le corps de souris (200) et le moyen de détection (310) l'un de l'autre.

4. Dispositif dit souris selon la revendication 3, dans lequel le moyen élastique (400) inclut :
une partie d'actionnement (410) ayant une portion inférieure circulaire (411) insérée dans une région creuse dans une portion inférieure de la partie de réception (110) et une portion supérieure (412) qui se projette vers la partie de réception (110) de manière à être connectée au corps de souris (200) ;
une pluralité d'éléments presseurs (420) couplés, en contact intime, à la portion inférieure de la partie d'actionnement (410) ; et
des ressorts (430) qui forcent élastiquement les éléments presseurs (420) vers la partie d'actionnement (410).

5. Dispositif dit souris selon la revendication 4, dans lequel les éléments presseurs (420) sont disposés en rangées à un intervalle de 90° les uns des autres autour de la portion inférieure (411) de la partie d'actionnement (410), et les ressorts (430) prévus sur les éléments presseurs (420) ont une force élastique égale dans une direction en traction.

6. Dispositif dit souris selon la revendication 3, dans lequel le moyen élastique (400) comprend un barreau élastique qui est fixé à la portion centrale de la partie de réception (110) et qui est fixé, à son extrémité supérieure, au corps de souris (200).

7. Dispositif dit souris selon la revendication 1, comprenant en outre un câble à signaux (500) qui transmet les signaux de mouvement de pointeur, dans lequel le câble à signaux (500) est connecté au boîtier (100) pour transmettre le signal de mouvement de pointeur depuis le moyen de détection de pression (310) quand le corps de souris (200) est monté sur le boîtier (100), et est connecté au corps de souris (200) pour transmettre le signal de mouvement de pointeur depuis le moyen de détection de mouvement (200) quand le corps de souris (200) est séparé du boîtier (100), ou bien
un câble à signaux (500) connecté au corps de souris (200) pour transmettre le signal de mouvement de pointeur, dans lequel le câble à signaux (500) transmet le signal de mouvement de pointeur depuis le moyen de détection de pression (310) quand le corps de souris (200) est monté sur le boîtier (100), et transmet le signal de mouvement de pointeur depuis le moyen de détection de mouvement (220) quand le corps de souris (200) est séparé du boîtier (100) ; ou encore dans lequel chacun du moyen de détection (310) et du moyen de détection de mouvement (220) est adapté à transmettre le signal de mouvement de pointeur par une onde radio, et le dispositif dit souris comprend en outre un commutateur de mode (600) prévu sur le corps de souris de manière à mettre en marche ou à l'arrêt un fonctionnement du moyen de détection de mouvement (220).

8. Dispositif dit souris selon la revendication 7, comprenant en outre :
une paire de corps magnétiques opposés (440) pour générer une force d'attraction, dans lequel l'un des corps magnétiques est prévu dans un fond de la partie de réception (110), et un corps magnétique restant est prévu dans une face inférieure du corps de souris (200).

9. Dispositif dit souris selon la revendication 7, comprenant en outre un élément élastique (450) qui se projette depuis la paroi intérieure de la partie de réception (110) vers le corps de souris (200), dans lequel le corps de souris (200) comporte un creux qui reçoit une extrémité distale de l'élément élastique (450).

10. Dispositif dit souris selon la revendication 9, dans lequel l'élément élastique (450) est formé le long de la circonférence entière de la paroi intérieure de la partie de réception (110).
